# EUROPEAN PATENT APPLICATION

(11) **EP 1 441 484 A2**
(43) Date of publication of application: **28.07.2004**
(21) Application number: 04001197.5
(22) Date of filing: 21.01.2004
(51) Int. Cl.: H04L 25/03

(54) **Reception and equalisation of multicarrier signals**

(30) Priority: 22.01.2003 JP 2003013400
(71) Applicant: Kabushiki Kaisha Toshiba, Tokyo (JP)
(72) Inventor: Seki, Takashi, 1-1, Shibaura 1-chome Minato-ku Tokyo (JP); Sugimoto, Masahiko, 1-1, Shibaura 1-chome Minato-ku Tokyo (JP)
(74) Representative: HOFFMANN - EITLE

(57) **Abstract**

An apparatus for receiving an OFDM signal, including an AC and TMCC signals (2), a CP signal (3) and a SP signal (4), includes: an FFT circuit (15) configured to input the received OFDM signal and perform an FFT on the input OFDM signal based on an FFT window; an interpolation circuit (22) configured to interpolate the SP signal (4) outputted from theFFT circuit (15) ; an equalizer (26a) configuredtoequalize the AC and TMCC signals (2) and the CP signal (3), as the reference of the interpolated SP signal (4); an S/N ratio detector (27a) configured to detect an S/N ratio indicating a reception quality, based on an equalized output of the equalizer (26a); and an FFT window controller (28) configured to control a position of the FFT window as the position where the reception quality is the best condition based on the S/N ratio.

## Description

### TECHNICAL FIELD

The present invention pertains to an OFDM receiving apparatus for receiving a transmission signal using an Orthogonal Frequency Division Multiplex (OFDM) modulation system and a method of demodulation in the OFDM receiving apparatus. In particular, the present invention pertains to a technology for optimizing a First Fourier Transfer (FFT) window position of the OFDM demodulation.

### BACKGROUND ART

A digital transmission system by use of an OFDM transmission signal has recently been put to practical use especially in a field of terrestrial digital broadcasting. In the terrestrial digital broadcasting, a broadcasting using a single frequency network has been considered using the feature of the OFDM modulation system such as its robustness against multi-path interference. In this case, since the multi-pass interference with long delay time occurs, it is necessary to control an FFT window position in the OFDM modulation correctly.

Therefore, the present applicant discloses a technology for controlling an FFT window position using an S/N ratio (variance value) of the modulated signal in Japanese Patent Laid Open Publication (Kokai) No. 2001-34577. According to the technology disclosed in the above publication, if the multi-pass interference with the long delay time occurs so as the single frequency network, the FFT window position in the OFDM modulation can be controlled correctly.

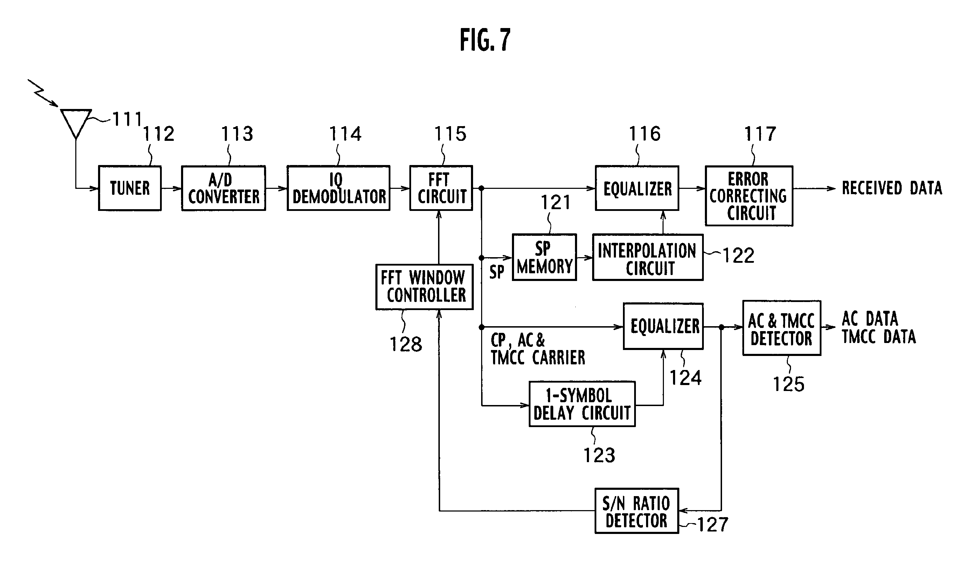

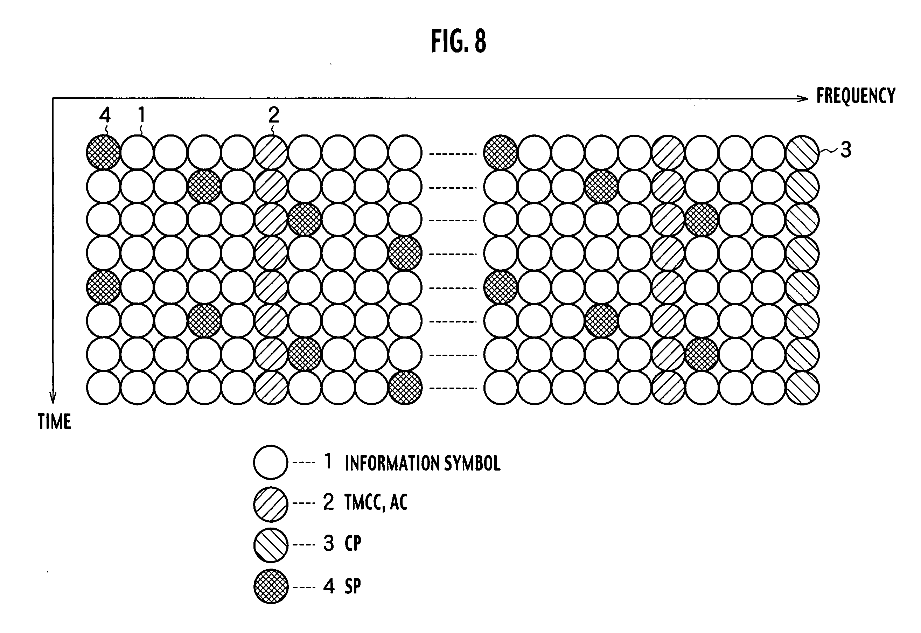

Fig. 7 is a schematic block diagram showing an OFDM receiving apparatus including a circuit for controlling the FFT window position. Fig. 8 is an illustration showing an example of formatting an OFDM transmission signal received by the OFDM receiving apparatus shown in Fig. 7.

As shown in Fig. 7, an OFDM signal received at an antenna 111 is input to a tuner 112 , which then selects the OFDM signal of a predetermined channel and converts the selected OFDM signal into an intermediate frequency band signal (IF signal). An output of the tuner 112 is converted to a digital signal by an analog/digital converter (A/D converter) 113.

An output of the A/D converter 113 is converted to a complex base-band signal by an IQ demodulator 114. An output of the IQ demodulator 114 is supplied to a First Fourier Transform (FFT) circuit 115. The FFT circuit 115 performs First Fourier Transformation (FFT) based on a FFT window in order to convert the complex base-band signal from time-axial data to frequency-axial data. By this processing, an output of the FFT circuit 115 takes on such a signal format as shown in Fig. 8. The output of the FFT circuit 115 is supplied to an equalizer 116.

Further, a scattered pilot (hereinafter referred to as SP) signal 4 from among the output of the FFT circuit 115 is supplied to an SP memory 121 and an interpolation circuit 112, and interpolated both in the time direction and the frequency direction. An equalizer 116 uses the SP signal 4 interpolated by the interpolation circuit 112 to thereby guess a transmission-pass response over all the times and all the frequency in order to then equalize the amplitude and phase of the information symbol 1 according to a demodulation method corresponding to the transmission-pass response. An output of the equalizer 116 is supplied to an error correcting circuit 117, which then conducts decoding for error correction, that is, corrects errors occurred during transmission, an output of which is provided as received data.

On the other hand, as shown in Fig.8, since additive information signals 2 (a Transmission and Multiplexing Configuration and Control (TMCC) signal and an Auxiliary Channel (AC) signal) and a consecutive pilot (hereinafter referred to as CP) signal 3 from among the output of the FFT circuit 115 are arranged in specific frequencies sequentially and modulated by Binary Phase Shift Keying (BPSK) method, each of the TMCC signal and the AC signal 2 and CP signal 3 can be equalized by a equalizer 124 as the reference of a previous symbol of the same frequency outputted from a 1-symbol delay circuit 123. An output of the equalizer 124 is supplied to an AC & TMCC detector 125, which detects and decodes the TMCC signal and the AC signal 2 and outputs them as AC data and TMCC data.

Furthermore, the output of the equalizer 124 branches to be supplied to an S/N ratio detector 127, which obtains variance values from a BPSK reference signal point and averages the variance values in order to detect an S/N ratio indicating a reception quality.

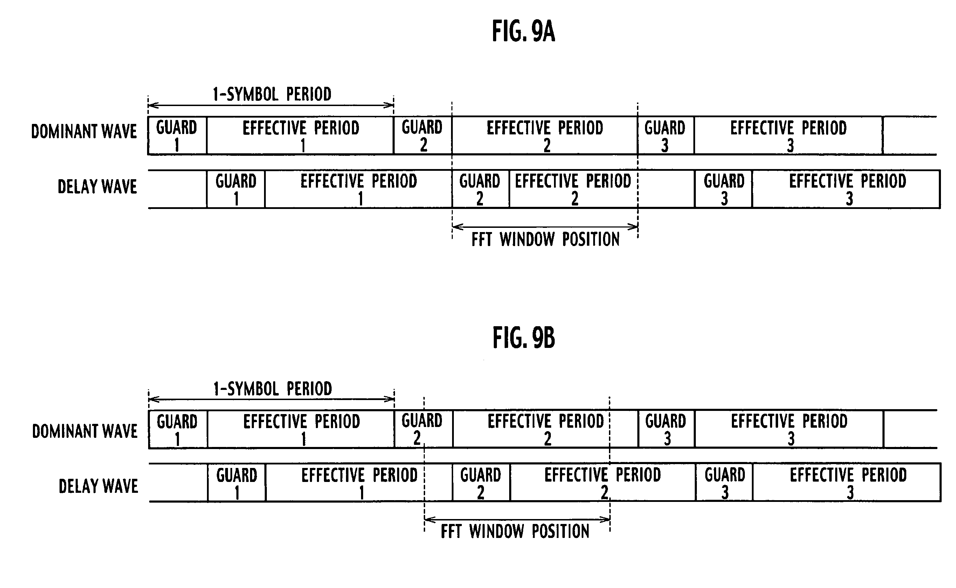

An output of the S/N detector 127 is supplied to an FFT window controller 128, which controls an FFT window position based on the S/N ratio. In the case of receiving the multi-pass interference wave with the long delay time shown in Figs. 9, although the received signal can be demodulated without interference between symbols by the delay wave in the FFT window position shown in Fig. 9A, the S/N ratio suffers degradation from the interference between the symbols by the delay wave in the FFT window position shown in Fig. 9B. Therefore, the FFT window controller 128 compares the S/N ratios when changing the FFT window position, and sets the FFT window position as the position where the S/N ratio is the best condition.

### DISCLOSURE OF THE INVENTION

AS explained above, the OFDM receiving apparatus shown in Fig. 7 equalizes each of the TMCC carrier and AC carrier 2 and CP carrier 3 modulated by the BPSK method as the reference of the previous symbol of the same frequency, and detects the S/N ratio indicating the reception quality based on the equalized output. The detection of the S/N ratio by using the BPSK career has the advantage that the detection range is wide, as compared with the case where the S/N ratio is detected by using the equalized output of the information data 1.

When the FFT window position deviates shown in Fig. 9B, however, since the delay time increases in both of the dominant wave and the delay wave in the output of the FFT circuit 115, not only the degradation by the interference between the symbols but also the error in the interpolation of the SP signal 4 by the interpolation circuit 122 are occurred. However, since the S/N ratio detector 127 cannot detect the error of in the interpolation of the SP signal 4, the S/N ratio detector 127 cannot detect the S/N ratio including the degradation by the error in the interpolation of the SP signal 4, consequently the detection accuracy of the FFT window position in the FFT window controller 128 deteriorates.

The present invention is made to resolve problems des cribed above and aims to provide an OFDM receiving apparatus and a method of demodulation which can detect the S/N ratio including an influence of the degradation by an error in the interpolation and detect the optimal position of the FFT window with sufficient accuracy based on the detected S/N ratio, even if the error in the interpolation of the scattered pilot signal occurs.

In order to accomplish the object, an OFDM receiving apparatus according to an embodiment of the present invention, the OFDM signal including at least one signal selected from an additive information signal (2) transmitted at a specific frequency and a continual pilot signal (3) transmitted at a specific frequency, and a scattered pilot signal (4) transmitted as scattered along frequency and time axes, characterized by including: a fast Fourier transform circuit (15) configured to input the received OFDM signal and perform a fast Fourier transformation on the input OFDM signal based on an FFT window, which specifies the range on a time-axis of the fast Fourier transformation, in order to convert the time-axial data to frequency-axial data; an interpolation circuit (22) configured to interpolate the scattered pilot signal (4) outputted from the fast Fourier transform circuit (15) ; an equalizer (26a) configured to equalize at least one signal selected from the additive information signals (2) and the continual pilot signal (3), as the reference of the interpolated scattered pilot signal (4) outputted from the interpolation circuit (22); a reception quality signal detector (27a) configured to detect a reception quality signal indicating a reception quality of the received OFDM signal, based on an equalized output of the equalizer (26a) ; and an FFT window controller (28) configured to control a position of the FFT window as the position where the reception quality is the best condition, based on the reception quality signal detected by the reception quality signal detector (27a).

Further, a method of demodulation in an apparatus for receiving an Orthogonal Frequency Division Multiplex (OFDM) signal, according to an embodiment of the present invention, the OFDM signal including at least one signal selected from an additive information signal transmitted at a specific frequency and a continual pilot signal transmitted at a specific frequency, and a scattered pilot signal transmitted as scattered along frequency and time axes, characterized by including: inputting the received OFDM signal and performing a fast Fourier transformation on the input OFDM signal based on an FFT window, which specifies the range on a time-axis of the fast Fourier transformation, in order to convert the time-axial data to frequency-axial data; interpolating the scattered pilot signal performed by the fast Fourier transformation; equalizing at least one signal selected from the additive information signals and the continual pilot signal, as the reference of the interpolated scattered pilot signal; detecting a reception quality signal indicating a reception quality of the received OFDM signal based on an equalized output; and controlling a position of the FFT window as the position where the reception quality is the best condition, based on the reception quality signal.

As above constitution, the OFDM receiving apparatus equalizes the additive information signals (2) and continual pilot signal (3) from among the output of the fast Fourier transform circuit (15), as the reference of the interpolated scattered pilot signal (4), which is the reference signal for equalizing the information symbol (1), and then detects the reception quality signal from the variance values of the equalized output. Therefore, even if error in the interpolation of the scattered pilot signal (4) occurs, the OFDM receiving apparatus can detect the reception quality signal including an influence of the degradation by the error in the interpolation and detect the optimal position of the FFT window with sufficient accuracy based on the detected reception quality signal.

### BRIEF DESCRIPTION OF THE DRAWINGS

Fig. 1 is a schematic block diagram showing an example of the composition of an OFDM receiving apparatus according to a first embodiment of the present invention.
Fig. 2 is a schematic block diagram showing an example of the composition of an equalizer for equalizing a TMCC signal, an AC signal, and a CP signal of the OFDM receiving apparatus shown in Fig. 1.
Fig. 3 is a schematic block diagram showing an example of the composition of an OFDM receiving apparatus according to a second embodiment of the present invention.
Fig. 4 is a schematic block diagram showing an example of the composition of an OFDM receiving apparatus according to a third embodiment of the present invention.
Fig. 5 is a schematic block diagram showing an example of the composition of an OFDM receiving apparatus according to another embodiment of the present invention.
Fig. 6 is a schematic block diagram showing another example of the composition of an OFDM receiving apparatus according to another embodiment of the present invention.
Fig. 7 is a schematic block diagram showing an example of the composition of an OFDM receiving apparatus.
Fig. 8 is a schematic illustration showing an example of formatting a transmission signal using an OFDM modulation system.
Figs. 9A and 9B are schematic illustrations for explaining a deviation of an FFT window position in the case of receiving a multi-pass interference wave with the long delay time.

### DETAILED DESCRIPTION

Various embodiments of the present invention will be described herein below with reference to the accompanying drawings. It is to be noted that the same or similar reference numerals are applied to the same or similar parts and elements throughout the drawings, and the description of the same or similar parts and elements will be omitted or simplified.

Although each OFDM receiving apparatus in following embodiments is explained as receiving an OFDM signal of the signal format shown in Fig. 8, the signal format is not limited to this format.

As shown in Fig.8, an information symbol 1 is modulated by, for example, the 64QAM method. A Transmission and Multiplexing Configuration and Control (TMCC) signal and an Auxiliary Channel (AC) signal 2 are used to transmit transmission parameter information (e.g., modulation method, interleave) and additive information respectively, and transmitted by a carrier (frequency slot) at a specific frequency by the differential Binary Phase Shift Keying (BPSK) method. A Continual Pilot (CP) signal is a nom-modulated signal transmitted by a carrier (frequency slot) at a specific frequency. A Scattered Pilot (SP) signal 4 is a nom-modulated signal transmitted as scattered along the frequency and time axes and used by an OFDM receiving apparatus for guessing transmission path properties or reproducing a synchronous signal.

### First Embodiment

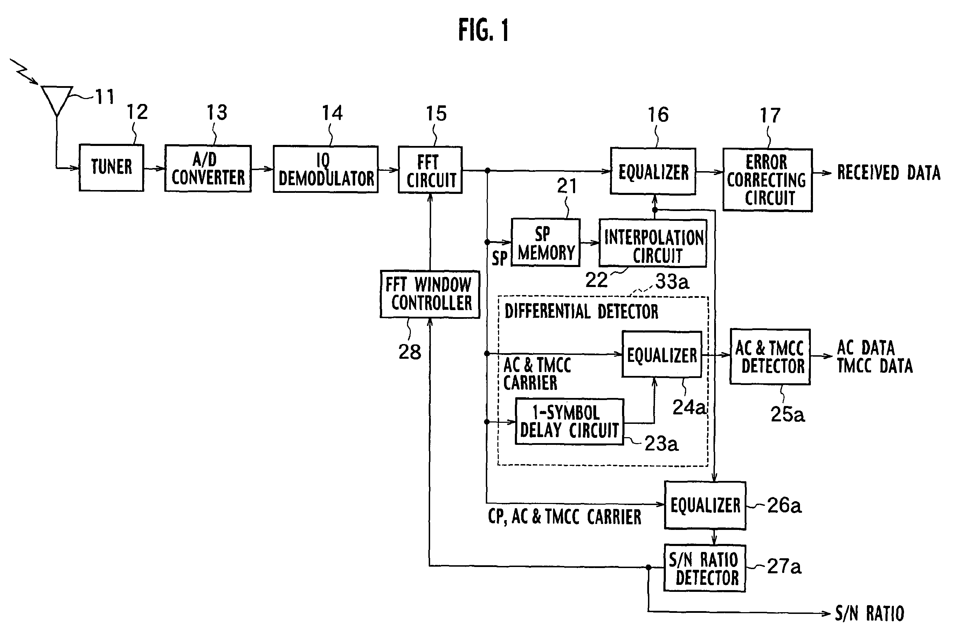

Fig. 1 is a schematic block diagram showing an example of the composition of an OFDM receiving apparatus according to a first embodiment. The OFDM receiving apparatus according to a first embodiment includes a Fast Fourier Transform (FFT) circuit 15, an interpolation circuit 22, an equalizer 26a, an S/N ratio detector (reception quality signal detector) 27a, and an FFT window controller 28. The FFT circuit 15 inputs an OFDM signal and performs a Fast Fourier Transformation (FFT) on the input OFDM signal based on an FFT window, which specifies the range on a time-axis of the FFT, in order to convert the time-axial data to frequency-axial data. The interpolation circuit 22 interpolates an SP signal 4 outputted from the FFT circuit 15. The equalizer 26a equalizes additive information (AC and TMCC) signals 2 and a CP signal 3 as the reference of the interpolated SP signal 4 outputted from the interpolation circuit 22. The S/N ratio detector (reception quality signal detector) 27a detects an S/N ratio (reception quality signal) indicating a reception quality of the received signal, based on an equalized output of the equalizer 26a. The FFT window controller 28 controls a position of the FFT window as the position where the reception quality is the best condition, based on the S/N ratio detected by the S/N ratio detector 27a.

As shown in Fig. 1, an OFDM transmit signals received at an antenna 11 are input to a tuner 12. The tuner 12 selects the OFDM transmit signal of a predetermined channel and converts the selected OFDM transmit signal into an intermediate frequency (IF) band signal. An output of the tuner 12 is supplied to an analog/digital converter (A/D converter) 13 and converted to a digital signal. An output of the A/D converter 13 is supplied to an IQ demodulation circuit 14. The IQ demodulation circuit 14 detects the output of the A/D converter 13 in a quasi-synchronous orthogonal manner and converts it to a complex base-band signal. The complex base-band signal outputted from the IQ demodulation circuit 14 is supplied to the FFT circuit 15.

The FFT circuit 15 performs the fast Fourier transformation on the complex base-band signal based on the FFT window, which specifies the range on the time-axis to perform the FFT, in order to convert the time-axial data to frequency-axial data. As the result, an output of the FFT circuit 15 takes on such the signal format as shown in FIG. 8. The output of the FFT circuit 15 is supplied to an equalizer 16.

Further, the SP signal 4, which is a reference signal for equalizing the information symbol 1, from among the output of the FFT circuit 15 is supplied to an SP memory 21 and the interpolation circuit 12. Symbols of a predetermined number of the SP signal 4 are stored in the SP memory 21, and then the SP signal 4 is filtered both in the time direction and the frequency direction and interpolated as an intended discrete arrangement.

The equalizer 16 guesses a transmission-path response over all the times and all the frequencies using the interpolated SP signal outputted from the interpolation circuit 22, and equalizes the amplitude and the phase of the information symbol 1 according to a demodulation method corresponding to the transmission-path response. An output of the equalizer 16 is supplied to an error correcting circuit 17, which then conducts decoding for error correction, that is, corrects errors which occurred during transmission, an output of which is provided as received data.

On the other hand, the additive information (AC and TMCC) signals 2 from among the output of the FFT circuit 15 are supplied to a differential detector 33a, which includes a 1-symbol delay circuit 23a and an equalizer 24a. As shown in Fig. 8, since the additive information (AC and TMCC) signals 2 are arranged in the specific frequencies sequentially and modulated by the BPSK method, the additive information signals 2 can be equalized by the equalizer 24a as the reference of a previous symbol of the same frequency outputted from the 1-symbol delay circuit 23a. An output of the equalizer 24a is supplied to an AC & TMCC detector 25a. The AC & TMCC detector 25a detects and decodes the output of the equalizer 24a and outputs it as AC data and TMCC data. The AC data and the TMCC data are supplied to each section of the OFDM receiving apparatus, which then uses it for setting a carrier modulation parameter, an error correction parameter, or the like.

Furthermore, the additive information (AC and TMCC) signals 2 and the CP signal 3 from among the output of the FFT circuit 115 are supplied to the equalizer 26a. The equalizer 26a equalizes the additive information (AC and TMCC) signals 2 and the CP signal 3 as the reference of the interpolated SP signal 4 provided from the interpolation circuit 22. The additive information (AC and TMCC) signals 2 are modulated by the BPSK method in order to simplify the demodulation processing of the OFDM receiving apparatus, and originally equalized as the reference of a previous symbol of the same frequency. However, as shown in Fig. 1, since the signal point of the BPSK can be modulated by equalizing the AC signal and TMCC signal 2 using the interpolated SP signal, which is the reference signal for equalizing the information symbol 1, therefore, the S/N ratio (reception quality signal) can be detected by using the equalized output of the equalizer 26a. The equalized output of the equalizer 26a is supplied to the S/N ratio detector 27a.

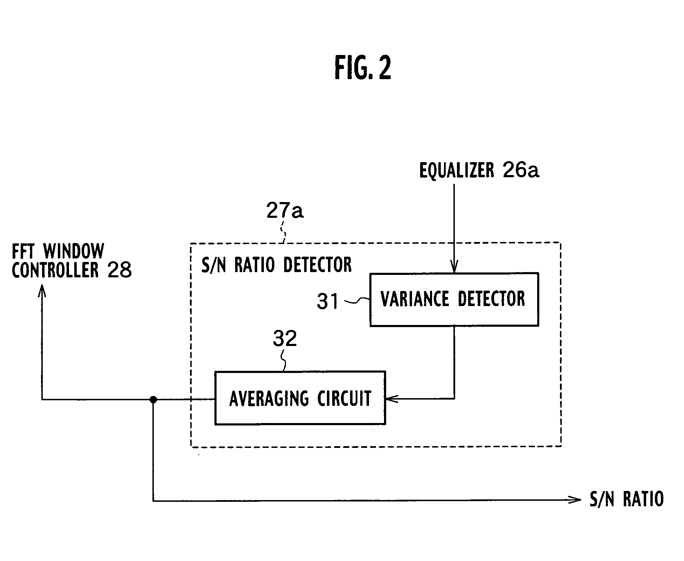

The S/N ratio detector 27a includes a variance detector 31 and an averaging circuit 32 shown in Fig. 2, obtains respective variance values from a predetermined reference signal point (for example, the BPSK reference signal point) for the equalized output of the equalizer 26a, averages the obtained variance values in the time direction and/or the frequency direction, and detects the S/N ratio (reception quality signal) indicating the reception quality.

More specifically, the variance detector 31 decides a detection output for each of the TMCC and AC carriers to thereby obtain the BPSK reference signal point and then obtains a squared value (I variance value) of a difference between a detection output I signal and the reference I signal and another squared value (Q variance value) of a difference between a detection output Q signal and the reference Q signal. As for the CP carrier, a squared value (I variance value) of a difference between the detection output I signal and the known reference I signal and another squared value (Q variance value) of a difference between the detection output Q signal and the known reference Q signal are obtained.

An output (I and Q variance values) of the variance detector 31 is supplied to the averaging circuit 32. The averaging circuit 32 averages I and Q variance values of each of the TMCC carrier and AC carrier as well as the CP carrier both in the frequency direction (between complex carriers) and the time direction (between complex symbols) and outputs an thus obtained average as the S/N ratio of the received signal. It should be noted that the averaging circuit 32 may synthesize an average based on the I variance values and that based on the Q variance values into the S/N ratio or take only an average based on the I variance values or the Q variance values as the S/N ratio.

The S/N ratio outputted from the S/N detector 27a is not only supplied to the FFT window controller 28, but also may be used as a monitor use for adjustment of the antenna 11 etc.

Returning to the block diagram of Fig. 1, the FFT window controller 28 controls a position of the FFT window based on the S/N ratio. In other words, the FFT window controller 28 compares the S/N ratio when changing the FFT window position and sets the FFT window position as the position where the S/N ratio is the best condition. Then, the FFT circuit 15 performs the Fast Fourier Transformation (FFT) based on the FFT window position set by the FFT window controller 28.

As explained above constitution, the OFDM receiving apparatus according to the first embodiment equalizes the additive information (AC and TMCC) signals 2 and CP signal 3 from among the output of the FFT circuit 15, as the reference of the interpolated SP signal 4, which is the reference signal for equalizing the information symbol 1, and then detects the S/N ratio (reception quality signal) from the variance values of the equalized output. Therefore, even if error in the interpolation of the SP signal 4 occurs, the OFDM receiving apparatus can detect the S/N ratio including an influence of the degradation by the error in the interpolation and detect the optimal position of the FFT window with sufficient accuracy based on the detected S/N ratio.

Further, the OFDM receiving apparatus uses such data having a lower multi-valued modulation level than the information symbol 1 (64QAM), that is, the TMCC carrier and AC carrier 2 and the CP carrier 3 (differential BPSK) to thereby detect the S/N ratio (variance value) of the received signal. Therefore, the OFDM receiving apparatus can detect the S/N ratio over a wide range of frequencies of the received signal. Furthermore, since the variance of the complex carriers (TMCC and AC carriers 2 and CP carrier 3) scattered in a transmission band are averaged, it is possible to detect the S/N ratio corresponding to the reception quality of the received data as a whole.

### Second Embodiment

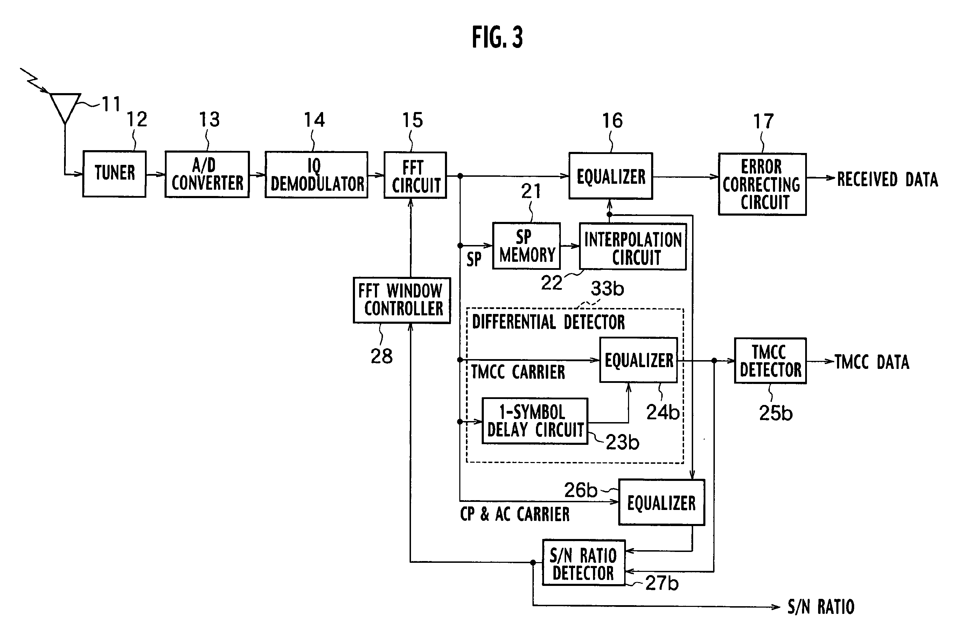

Fig. 3 is a schematic block diagram showing an example of the composition of an OFDM receiving apparatus according to a second embodiment.

In the first embodiment, the OFDM receiving apparatus supplies the additive information (AC and TMCC) signals 2 from among the output of the FFT circuit 15 to the differential detector 33a, equalizes as the reference of a previous symbol of the AC and TMCC signals 2, and then supplies the equalized output to the Ac & TMCC detector 25a. Although it is necessary to decode the TMCC signal among the additive information (AC and TMCC) signals 2 in order to use for setting parameters of each section of the OFDM receiving apparatus, it is not necessary to decode the AC signal in the cases where the AC signal is not used by the receiving apparatus.

Therefore, as shown in Fig. 3, in the OFDM receiving apparatus according to the second embodiment, a differential detector 33b detects a difference of only the TMCC signal, which is used for setting parameters, etc., among the additive information (AC and TMCC) signals 2 outputted from the FFT circuit 15. The output of the differential detector 33b is supplied to a TMCC detector 25b, which then decodes and outputs the differential detection output as the TMCC data.

An equalizer 26b equalizes both of the AC signal except the TMCC signal, which is used for the differential detection, among the additive information (AC and TMCC) signals 2 outputted from the FFT circuit 15 and the CP signal 3 outputted from the FFT circuit 15 as the reference of the interpolated SP signal 4 outputted from the interpolation circuit 22. Then, an S/N ratio detector 27b obtains respective variance values from the BPSK reference signal point by using an equalized output and the differential detection output of the differential detector 33b, averages the obtained variance values, and detects the S/N ratio.

As explained above, in the OFDM receiving apparatus according to the second embodiment, the S/N ratio detector 27b detects the S/N ratio about the TMCC signal required for setting parameters from among the additive information (AC and TMCC) signals 2 outputted from the FFT circuit 15 by using the differential detection output of the differential detector 33b. The S/N ratio detector 27b further detects the S/N ratio about the AC signal not required for setting parameters among the additive information signals 2 and the CP signal 3 by using the signal equalized as the reference of the interpolated SP signal 4 . According to the above constitution, degradation of the S/N ratio caused by the deviation of the FFT window position can be detected with sufficient accuracy than ever. Furthermore, the amount of operations of equalizing processing can be reduced compared with the OFDM receiving apparatus of the first embodiment,

### Third Embodiment

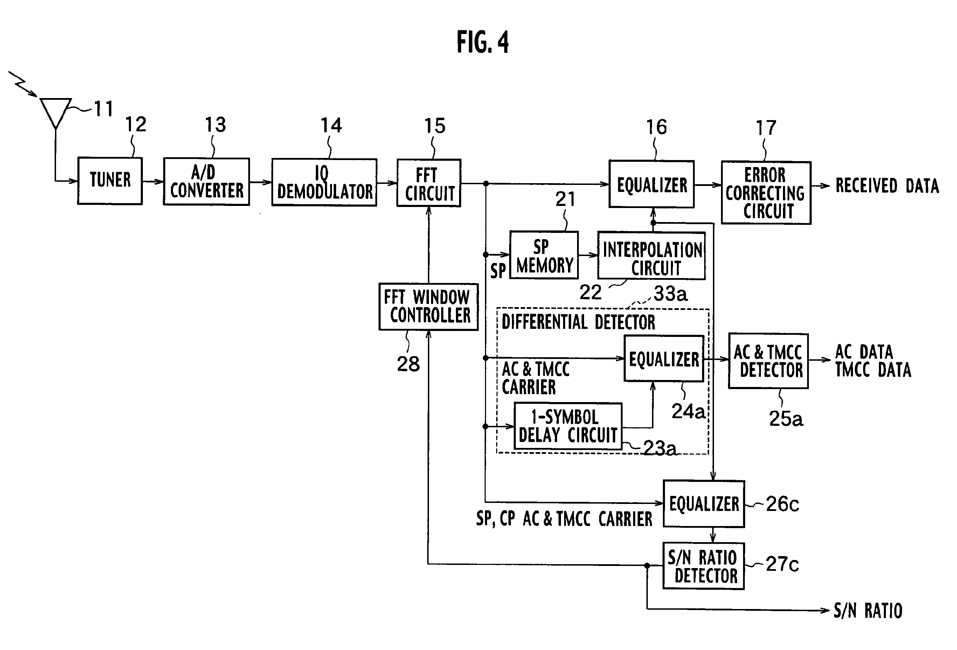

Fig. 4 is a schematic block diagram showing an example of the composition of an OFDM receiving apparatus according to a third embodiment.

In the first embodiment, the OFDM receiving apparatus equalizes the additive information (AC and TMCC) signals 2 and CP signal 3 from among the output of the FFT circuit 15 as the reference of the interpolated SP signal 4, and detects the S/N ratio (reception quality signal) from the variance values of this equalized output by the S/N detector 27a.

By contrast, as shown in Fig. 4, in the OFDM receiving apparatus according to the third embodiment, an equalizer 26c equalizes the CP signal 3, the additive information (AC and TMCC) signals 2 and the SP signal 4 outputted from the FFT circuit 15, as the reference of the SP signal 4 interpolated by the interpolation circuit 22. Then, an S/N ratio detector 27c detects the S/N ratio (reception quality signal) from the variance values of an equalized output of the equalizer 26c.

As explained above, the OFDM receiving apparatus according to the third embodiment equalizes the additive information (AC and TMCC) signals 2, the CP signal 3, and the SP signal 4 as the reference of the interpolated SP signal 4, and then detects the S/N ratio based on the equalization result. Although when an interpolation error of the SP signal 4 does not occurs, the variance value of the SP signal 4 equalized by the equalizer 26c suffers no degradation, when an interpolation error of the SP signal 4 occurs, an error of the SP signal 4 equalized by the equalizer 26c also occurs. Therefore, since the S/N ratio is detected by using the equalized output of not only the AC and TMCC signals 2 and the CP Signal 3 but also the SP signal 4, degradation of the S/N ratio caused by the deviation of the FFT window position can be detected with more sufficient accuracy compared with the OFDM receiving apparatus of the first or second embodiment.

### Other Embodiment

Although the first to third embodiments have been explained, the present invention may be embodied in other specific forms without departing from the spirit or essential characteristics thereof.

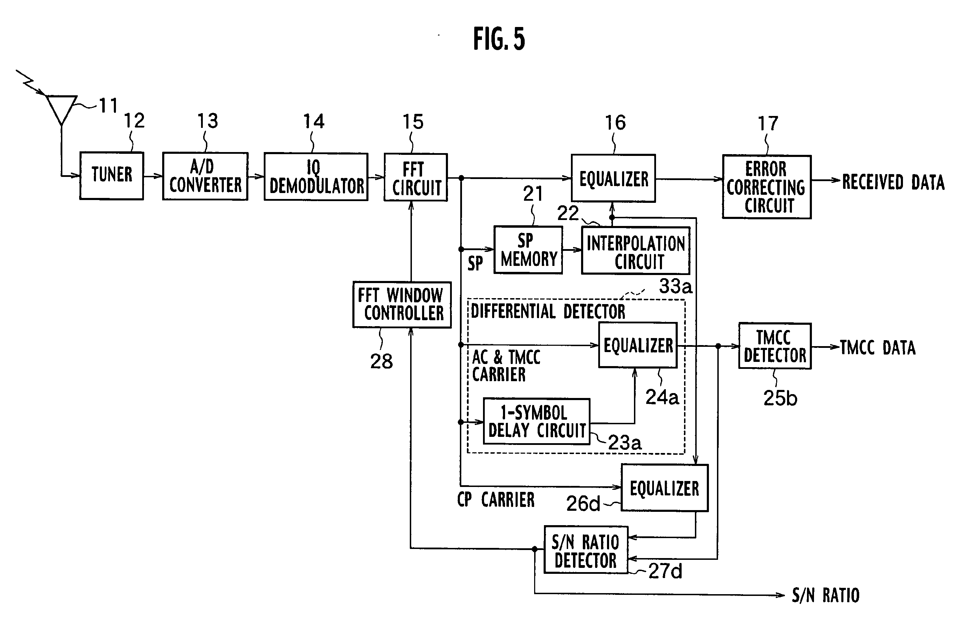

For example, an OFDM receiving apparatus shown in Fig. 5 is the modification of the OFDM receiving apparatus explained in the second embodiment. In the OFDM receiving apparatus shown in Fig. 5, the differential detector 33a detects a difference of the additive information (AC and TMCC) signals 2 from among the output of the FFT circuit 15, and then the TMCC detector 25b decodes and output an output of the differential detector 33b as the TMCC data. Further, An equalizer 26d equalizes only the CP signal 3 outputted from the FFT circuit 15 as the reference of the interpolated SP signal 4 outputted from the interpolation circuit 22. Then, an S/N ratio detector 27d obtains variance values from the BPSK reference signal point and averages the obtained variance values, by using the equalized CP signal 3 provided from the equalizer 26d and the differential detection output of the additive information (AC and TMCC) signals 2 provided from the differential detector 33b, and detects the S/N ratio.

Further, although each OFDM receiving apparatus of the first or second embodiment detects the S/N ratio using the CP signal 3 and the addition information (AC and TMCC) signal 2, the S/N ratio can also be detected only using some signals among these signals.

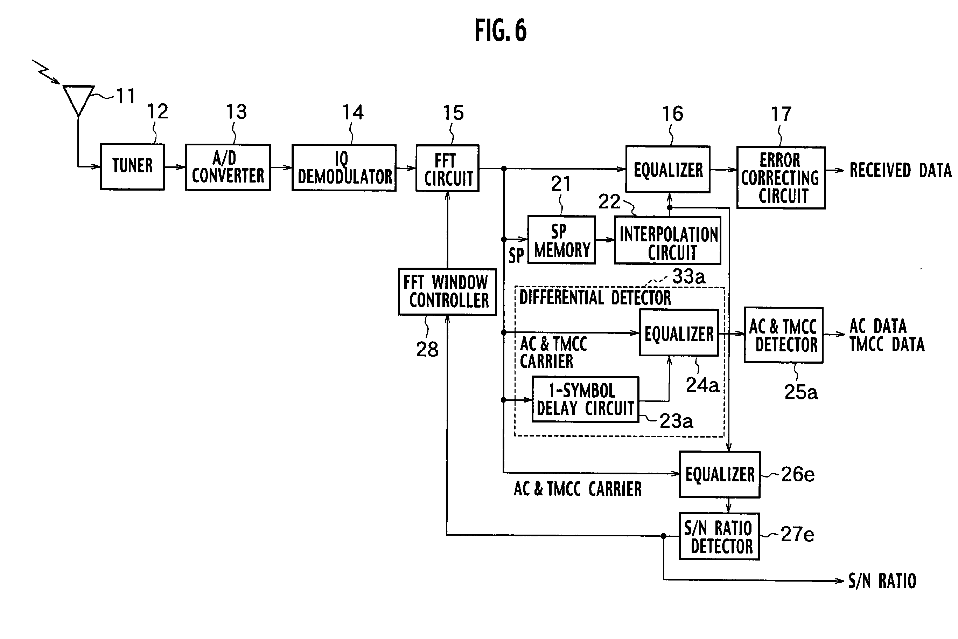

For example, in an OFDM receiving apparatus shown in Fig. 6, an equalizer 26e may equalize only the addition information (AC and TMCC) signal 2 outputted from the FFT circuit 15 as the reference of the interpolated SP signal 4 outputted from the interpolation circuit 22. Then, an S/N ratio detector 27e may obtain variance values from the BPSK reference signal point and average the obtained variance values, by using the equalized addition information (AC and TMCC) signal 2 provided from the equalizer 26e, and detect the S/N ratio.

Furthermore, although the third embodiment shown in Fig. 4 has been described with the example where the equalizer 26c equalizes not only the AC and TMCC signals 2 and the CP signal but also the SP signal 4 is based on the OFDM receiving apparatus of the first embodiment shown in Fig. 1, it is possible to be based on the OFDM receiving apparatus of the second embodiment shown in Fig. 3.

Moreover, some or all of each composition element of the OFDM receiving apparatus shown in each of the embodiments can also be configurable by computer software.

The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

According to each the embodiments, it is possible to provide the OFDM receiving apparatus and the method of demodulation which can detect the S/N ratio including an influence of the degradation by an error in the interpolation and can detect the optimal position of the FFT window with sufficient accuracy based on the detected S/N ratio.

### CROSS REFERENCE TO RELATED APPLICATIONS

This application claims benefit of priority under 35 use §119 to Japanese Patent Application No. 2003-013400 filed on January 22, 2003, the entire contents of which are incorporated by reference herein.

## Claims

1. An apparatus for receiving an Orthogonal Frequency Division Multiplex (OFDM) signal, the OFDM signal including at least one signal selected from an additive information signal (2) transmitted at a specific frequency and a continual pilot signal (3) transmitted at a specific frequency, and a scattered pilot signal (4) transmitted as scattered along frequency and time axes, **characterized by** comprising:
a fast Fourier transform circuit (15) configured to input the received OFDM signal and perform a fast Fourier transformation on the input OFDM signal based on an FFT window, which specifies the range on a time-axis of the fast Fourier transformation, in order to convert the time-axial data to frequency-axial data;
an interpolation circuit (22) configured to interpolate the scattered pilot signal (4) outputted from the fast Fourier transform circuit (15);
an equalizer (26a) configured to equalize at least one signal selected from the additive information signals (2) and the continual pilot signal (3), as the reference of the interpolated scattered pilot signal (4) outputted from the interpolation circuit (22);
a reception quality signal detector (27a) configured to detect a reception quality signal indicating a reception quality of the received OFDM signal, based on an equalized output of the equalizer (26a); and
an FFT window controller (28) configured to control a position of the FFT window as the position where the reception quality is the best condition, based on the reception quality signal detected by the reception quality signal detector (27a).

2. The apparatus of claim 1, **characterized by** further comprising
a differential detector (33a) configured to detect a difference of a part of the additive information signals (2) outputted from the fast Fourier transform circuit (15), and **characterized in that**:
the equalizer (26b) equalizes at least one of the additive information signals (2) except the differential detection signal, which is used for the differential detection, and the continual pilot signal (3), as the reference of the interpolated scattered pilot signal (4) outputted from the interpolation circuit (22); and
the reception quality signal detector (27b) detects the reception quality signal by using the equalized output of the equalizer (26) and an output of the differential detector (33a).

3. The apparatus of claim 1 or 2, **characterized in that**
the equalizer (26c) equalizes at least one of the additive information signals (2) and the continual pilot signal (3) the outputted from the fast Fourier transform circuit (15), and the pilot signal (4) outputted from the fast Fourier transform circuit (15), as the reference of the interpolated scattered pilot signal (4) outputted from the interpolation circuit (22).

4. The apparatus of claim 1, 2 or 3, **characterized in that** the reception quality signal detector (27a) includes:
a variance detector (31) configured to obtain respective variance values from a predetermined reference signal point for the respective equalized output of the equalizer (26a); and
an averaging circuit (32) configured to average the obtained variance values and detect the reception quality signal.

5. The apparatus of claim 1, 2, 3 or 4, **characterized in that**
the additive information signals (2) are modulated by the differential Binary Phase Shift Keying method.

6. The apparatus of claim 2, **characterized in that**
the differential detection signal from among the additive information signals (2) is a transmission and multiplexing configuration and control signal, and the additive information signals (2) except the differential detection signal is an auxiliary channel signal.

7. A method of demodulation in an apparatus for receiving an Orthogonal Frequency Division Multiplex (OFDM) signal, the OFDM signal including at least one signal selected from an additive information signal transmitted at a specific frequency and a continual pilot signal transmitted at a specific frequency, and a scattered pilot signal transmitted as scattered along frequency and time axes, **characterized by** comprising:
inputting the received OFDM signal and performing a fast Fourier transformation on the input OFDM signal based on an FFT window, which specifies the range on a time-axis of the fast Fourier transformation, in order to convert the time-axial data to frequency-axial data;
interpolating the scattered pilot signal performed by the fast Fourier transformation;
equalizing at least one signal selected from the additive information signals and the continual pilot signal, as the reference of the interpolated scattered pilot signal;
detecting a reception quality signal indicating a reception quality of the received OFDM signal based on an equalized output; and
controlling a position of the FFT window as the position where the reception quality is the best condition, based on the reception quality signal.

8. The method of claim 7, **characterized by** further comprising
detecting a difference of a part of the additive information signals performed by the fast Fourier transformation, and **characterized in that**:
in the equalizing, at least one of the additive information signals except the differential detection signal, which is used for the differential detection, and the continual pilot signal, are equalized as the reference of the interpolated scattered pilot signal; and
in the detection of the reception quality signal, the reception quality signal is detected by using the equalized output and an output of the differential detection.

9. The method of claim 7 or 8, **characterized in that**
in the equalizing, at least one of the additive information signals and the continual pilot signal performed by the fast Fourier transformation, and the pilot signal performed by the fast Fourier transformation are equalized as the reference of the interpolated scattered pilot signal.

10. The method of claim 7, 8 or 9, **characterized in that** the detection of the reception quality signal includes:
obtaining respective variance values from a predetermined reference signal point for the respective equalized output; and
averaging the obtained variance values and detecting the reception quality signal.
